(19) Europäisches Patentamt

European Patent Office

Office européen des brevets

(11) EP 0 790 490 B1

(12) EUROPÄISCHE PATENTSCHRIFT

(45) Veröffentlichungstag und Bekanntmachung des Hinweises auf die Patenterteilung:
07.09.2005 Patentblatt 2005/36

(51) Int Cl.$^7$: **G01F 1/66**

(21) Anmeldenummer: 96116208.8

(22) Anmeldetag: 10.10.1996

(54) **Ultraschall-Messwertgeber zur Bestimmung der Durchflussmenge einer strömenden Flüssigkeit**

Ultrasonic sensor for determining a flow rate of a flowing liquid

Capteur à ultrasons pour la détermination du débit d'un liquide en écoulement

(84) Benannte Vertragsstaaten:
**AT BE CH DE DK FR IT LI NL SE**
Benannte Erstreckungsstaaten:
**LT LV SI**

(30) Priorität: **16.02.1996 CH 41396**

(43) Veröffentlichungstag der Anmeldung:
**20.08.1997 Patentblatt 1997/34**

(73) Patentinhaber: **Landis+Gyr GmbH**
**90459 Nürnberg (DE)**

(72) Erfinder: **Günther, Hauenstein**
**63477 Maintal (DE)**

(74) Vertreter: **Lagler, Louis**
**Rentsch & Partner**
**Postfach 2441**
**8022 Zürich (CH)**

(56) Entgegenhaltungen:
**WO-A-86/02723         WO-A-94/20822**
**WO-A-95/35481         DE-A- 3 518 266**
**DE-U- 8 900 110**

**Beschreibung**

Die Erfindung betrifft einen Ultraschall-Messwertgeber zur Bestimmung der Durchflussmenge einer strömenden Flüssigkeit der im Oberbegriff des Anspruchs 1 genannten Art.

Solche Messwertgeber eignen sich beispielsweise zur Erfassung von Strömungsgeschwindigkeiten und darauf aufbauend zur Erfassung von Durchflussmengen und in Kombination mit Temperaturdifferenzmessungen zur Wärmeverbrauchserfassung und -verrechnung.

Ein Ultraschall-Messwertgeber der im Oberbegriff des Anspruchs 1 genannten Art ist bekannt aus der internationalen Patentanmeldung WO 86/02723. Der Messwertgeber weist ein rohrförmiges Gehäuse mit einer Ultraschallmessstrecke auf. Die Endteile des Gehäuses sind aufgeweitet und mit Aussengewinden zum Einbau in ein Rohrsystem versehen. Die Ultraschallwandler sind auf der axialen Rohrachse zentriert angeordnet und mittels Wandlerträgern radial an den Endteilen befestigt. Der Platzbedarf für die Aussengewinde und der Platzbedarf für die Befestigung der Wandlerträger führen bei vorgegebener minimaler Einbaulänge des Gehäuses zu einer kurzen Ultraschallmessstrecke und damit zu einer Verringerung der Genauigkeit des Messwertgebers. Zudem ist die Abdichtung der nach aussen geführten Anschlussdrähte der Ultraschallwandler in den Endteilen wegen der gerundeten Flächen schwierig. Zur Verkleinerung des Strömungswiderstandes sind den Ultraschallwandlern Verdrängungskörper vorgelagert.

Weitere Ultraschall-Messwertgeber sind bekannt aus der US amerikanischen Patentschrift 3 817 098, der internationalen Patentanmeldung WO 94/20822 und der deutschen Offenlegungsschrift DE 35 18 266.

Aus der schweizerischen Patentschrift CH 654 410 ist ein Ultraschallwandler bekannt, bei dem durch eine spezielle Geometrie der Elektroden eine glockenförmige Schallabstrahlung erreicht wird.

Der Erfindung liegt die Aufgabe zugrunde, einen Ultraschall-Messwertgeber vorzuschlagen, bei dem die Wandlerträger der Ultraschallwandler einfach befestigbar sind, die Abdichtung der nach aussen geführten Anschlussdrähte der Ultraschallwandler problemlos gewährleistet und die minimale Einbaulänge bei vorgegebener Länge der Ultraschallmessstrecke möglichst gering ist.

Die Erfindung besteht in den im Anspruch 1 angegebenen Merkmalen. Vorteilhafte Ausgestaltungen ergeben sich aus den abhängigen Ansprüchen.

Nachfolgend wird ein Ausführungsbeispiel der Erfindung anhand der Zeichnung näher erläutert.

Es zeigen:

Fig. 1        ein Gehäuse eines Ultraschall-Messwertgebers in einer ersten Schnittebene,

Fig. 2a-c     das Gehäuse des Ultraschall-Messwertgebers in diversen Schnittebenen,

Fig. 3a, b    einen Wandlerträger mit einem Ultraschallwandler,

Fig. 4        einen als Wellenleiter für kleine Nenndurchflüsse ausgelegten Messwertgeber mit einem zusätzlichen Messrohr,

Fig. 5        ein Detail eines reflexionsvermindernden Körperteils,

Fig. 7        einen weiteren als Wellenleiter für kleine Nenndurchflüsse ausgelegten Messwertgeber,

Fig. 8        einen als Nicht-Wellenleiter für grosse Nenndurchflüsse ausgelegten Messwertgeber,

Fig. 9        einen Messwertgeber mit asymmetrisch angeordneter Ultraschallmessstrecke, und

Fig. 10       ein aus mehreren Teilen bestehendes Gehäuse.

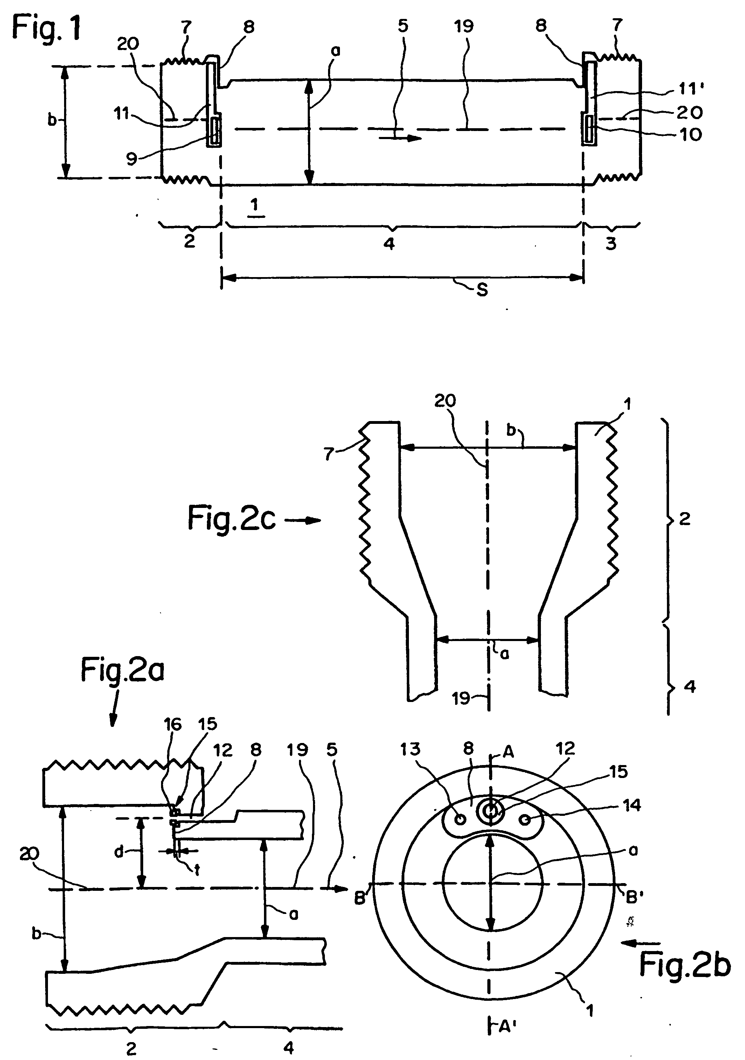

Die Fig. 1 zeigt in einer ersten Schnittebene ein Gehäuse 1 eines Ultraschall-Messwertgebers zur Bestimmung der Durchflussmenge einer durch ein Rohrsystem strömenden Flüssigkeit durch Messung der mittleren Durchflussgeschwindigkeit mit Hilfe von Ultraschallsignalen. Das annähernd rohrförmige Gehäuse 1 weist einen Einlassstutzen 2 und einen Auslassstutzen 3 auf, die durch ein Zwischenteil 4 verbunden sind. Der Einlassstutzen 2, das Zwischenteil 4 und der Auslassstutzen 3 sind bevorzugt aus einem Stück gefertigt, wobei als Material wegen seiner grossen Abriebfestigkeit besonders Messing, Aluminiumbronze, Stahl oder Rotguss geeignet ist. Die Flüssigkeit durchströmt den Einlassstutzen 2, das Zwischenteil 4 und den Auslassstutzen 3 in einer im wesentlichen gleichen, durch einen Pfeil dargestellten axialen Richtung 5. Der Einlass- und der Auslassstutzen 2, 3 sind mit einem Aussengewinde 7 versehen und mit einer radial, d.h. senkrecht zur und gegen die axiale Richtung 5 gerichteten, ebenen Fläche 8 zur axialen Befestigung eines einen Ultraschallwandler 9 bzw. 10 tragenden Wandlerträgers 11, 11' ausgebildet.

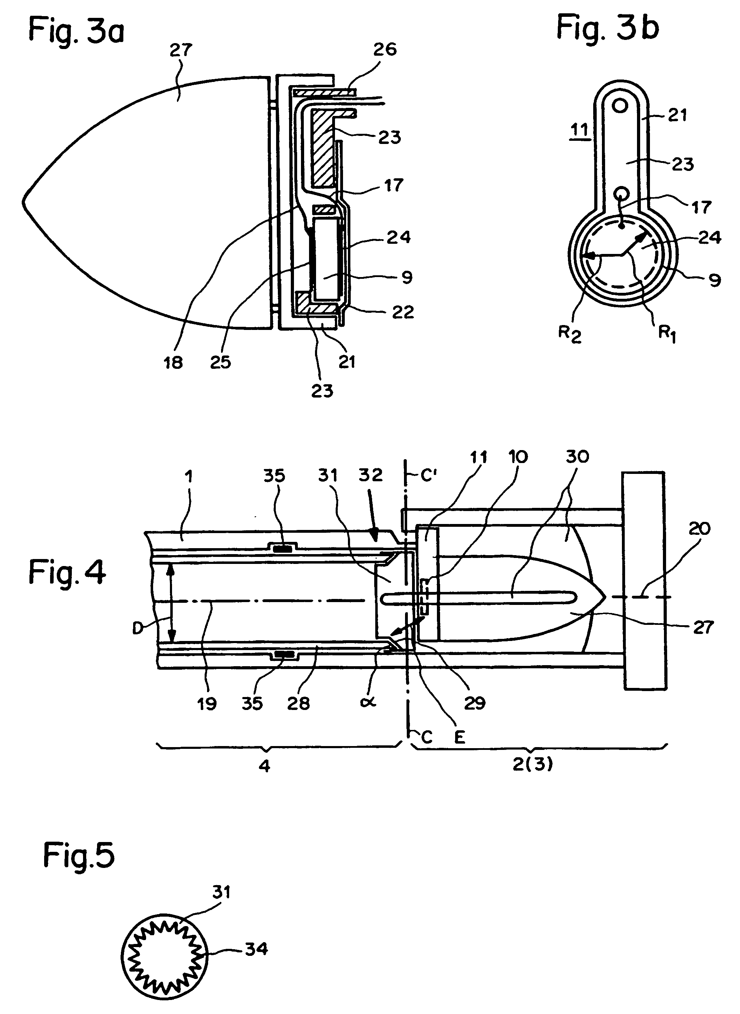

Die Fig. 2a zeigt im Detail den Einlassstutzen 2 in einer ersten Schnittebene, die in der Fig. 2b entlang der Linie A-A' verläuft. Die Fig. 2c zeigt den Einlassstutzen 2 in einer zweiten Schnittebene, die in der Fig. 2b entlang der Linie B-B' verläuft. Die Fig. 2b schliesslich zeigt einen Blick in Strömungsrichtung in das leere Gehäuse 1 hinein. Die Fläche 8 enthält eine parallel zur axialen Richtung 5 gerichtete Bohrung 12, die sich vom Innern des Gehäuses 1 nach draussen erstreckt, sowie zwei zur Bohrung 12 parallele Sacklochbohrungen 13, 14. Die Fläche 8 weist weiter eine die Bohrung 12 umschliessende Vertiefung 15 auf, in die ein Dichtungselement 16 (Fig. 2a) eingelegt ist. Der Wandlerträger 11 (Fig. 1) ist mittels in die Sacklochbohrungen 13, 14 geschraubter Schrauben an der Fläche 8 befestigt, wobei das Dichtungselement 16 zwischen den Wandlerträger 11 und die Fläche 8 eingeklemmt ist. Die Abmessungen des Dichtungselementes 16 und der Vertiefung 15 sind so bemessen, dass die Abdichtung des Gehäuseinneren gegen das Gehäuseäussere gewährleistet ist, auch wenn die montierten Wandlerträger 11 gegen die Fläche 8 anschlagen. Durch diese Konstruktion wird auch erreicht, dass die maximale Verformung, die das eingeklemmte Dichtungselement 16 erfahren kann, durch die Tiefe t der Vertiefung 15 begrenzt ist. Durch die Bohrung 12 sind Anschlussdrähte 17, 18 (Fig. 3a) der Ultraschallwandler 9 bzw. 10 (Fig. 1) gas- und wasserdicht bis ausserhalb des Gehäuses 1 geführt.

Wie aus der Fig. 1 ersichtlich ist, bilden die beiden gegeneinander Ultraschall abstrahlenden Ultraschallwandler 9 und 10 im Zwischenteil 4 eine Ultraschallmessstrecke. Das rohrförmige Zwischenteil 4 weist eine Rohrachse 19, die beiden Stutzen 2, 3 weisen eine Rohrachse 20 auf. Der Innendurchmesser a des Zwischenteils 4 ist kleiner als der Innendurchmesser b des Einlassstutzens 2 und des Auslassstutzens 3. Dies erhöht die Strömungsgeschwindigkeit im Bereich der Messstrecke. Der Übergang vom Einlassstutzen 2 auf das Zwischenteil 4 verläuft z.B. konisch, natürlich mit Ausnahme desjenigen Kreissektors, der die ebene Fläche 8 enthält. Dieser Übergang ist in den Fig. 2a und 2b durch eine gerade Linie dargestellt. Den Übergang bilden jedoch bevorzugt gebogene Flächen, damit der Druckabfall minimal wird. Bei der Ausführung des Gehäuses 1 gemäss den Fig. 2a-c fallen die Rohrachse 19 des Zwischenteils 4 und die Rohrachse 20 des Einlassstutzens 2 zusammen. Bei der Ausführung des Gehäuses 1 gemäss der Fig. 1 sind die Rohrachse 19 und die Rohrachsen 20 versetzt.

Die Ultraschallwandler 9 und 10 (Fig. 1) bestehen aus scheibenförmigen Schallwandlern aus Piezokeramik. Der Abstand d (Fig. 2a) der Bohrung 12 von der Rohrachse 19 ist so vorbestimmt, dass die Ultraschallwandler 9 und 10 bei vorgegebener Länge des Wandlerträgers 11 auch bei unterschiedlich grossen Gehäusen 1 auf der Rohrachse 19 zentriert sind. Diese Bedingung kann gemäss den Darstellungen in den Fig. 2a-c durch eine entsprechende Form des Einlass- und des Auslassstutzens 2 bzw. 3 und durch eine entsprechende Lage und Grösse der Fläche 8 eingehalten werden.

Die Fig. 3a und 3b zeigen beispielhaft den Wandlerträger 11 mit dem eingebauten Ultraschallwandler 9 in zwei senkrecht aufeinander stehenden Schnittebenen. Der Wandlerträger 11 besteht aus einem Trägerteil 21 und aus einer Membrane 22 aus nichtrostendem Stahl sowie aus einem Kunststoffteil 23. Der scheibenförmige Ultraschallwandler 9 ist in das Kunststoffteil 23 eingelegt, das zur elektrischen Isolation der Elektroden 24, 25 des Ultraschallwandlers 9 gegenüber dem Trägerteil 21 und der Membrane 22 dient. Das Kunststoffteil 23 mit dem Ultraschallwandler 9 wird in das Trägerteil 21 eingelegt, das anschliessend mit der Membrane 22 verschweisst wird. Das Kunststoffteil 23 weist eine hohle Nase 26 auf, die in die Bohrung 12 (Fig. 1) steckbar ist. Das Kunststoffteil 23 weist weiter eine Vertiefung und ein Loch auf, durch die der Anschlussdraht 17 der Elektrode 24 auf der Vorderseite des Wandlerträgers 11 auf die Rückseite des Wandlerträgers 11 geführt ist, von wo er zusammen mit dem Anschlussdraht 18 der anderen Elektrode 25 zur Nase 26 und durch diese hindurch geführt ist. Die Anschlussdrähte 17 und 18 bilden zusammen beispielsweise ein Koaxialkabel, das einen Durchmesser von 1 mm aufweist. Das Trägerteil 21 ist bevorzugt ein Stanz- und Biegeteil, es kann aber auch ein Schmiedeteil oder ein Pressteil sein.

Wie aus der Fig. 3b ersichtlich ist, ist der Wandlerträger 11 als rundes Gebilde mit einem länglichen Ansatz ausgebildet. Das runde Gebilde nimmt den Ultraschallwandler 9 auf. Sein Aussendurchmesser ist nur Bruchteile eines Millimeters grösser als der Durchmesser des Ultraschallwandlers 9. Die Membrane 22 ist mit dem Trägerteil 21 entlang dessen Randes verschweisst. Obwohl die Membrane 22 auf der Höhe der Nase 26 (Fig. 3a) ein entsprechendes Loch aufweist, ist der Ultraschallwandler 9 nach der Montage dank des Dichtungselementes 16 (Fig. 2a) von der Flüssigkeit im Gehäuse 1 getrennt.

Die beiden Elektroden 24 und 25 (Fig. 3a) sind kreisförmig und weisen einen Radius $R_1$ auf, der kleiner als der Radius $R_2$ des scheibenförmigen Ultraschallwandlers 9 ist. Der Radius $R_1$ ist vorteilhaft 0.4 mm kleiner als der Radius $R_2$. Die Form des Kunststoffteils 23 und des Trägerteils 21 sind nun so bemessen, dass einerseits der in das Kunststoffteil 23 eingelegte Ultraschallwandler 9 in Richtung der Schallabstrahlung über das Kunststoffteil 23 und das Trägerteil 21 hinaus übersteht und andererseits der Ultraschallwandler 9 mit radialem Spiel in das Kunststoffteil 23 einlegbar ist. Die Membrane 22 ist nun derart straff auf das Trägerteil 21 aufgeschweisst, z.B. durch Laserschweissen, dass sie den Ultraschallwandler 9 unter Zugspannung hält und ihn axial gegen das Kunststoffteil 23 drückt. Die Elektrode 24 oder die Membrane 22 wurde vor dem Schweissvorgang mit einem elastischen Klebeharzfilm beschichtet, damit die Elektrode 24 und die Membrane 22 elektrisch isoliert und verklebt sind, damit die Schwingungen des Ultraschallwandlers 9 in guter mechanischer Kopplung auf die Membrane 22 übertragen und als Ultraschall an die Flüssigkeit abgegeben werden. Da die Elektrode 24 die Vorderseite nicht bis zum Rand bedeckt, ist ausgeschlossen, dass die Membrane 22 den Klebeharzfilm so weit verdrängen kann, dass ein Kurzschluss zwischen der Elektrode 24 und der Membrane 22 zustande kommt. Falls die Elektrode 24 bis zum Rand der Scheibe reicht, d.h. $R_1 = R_2$ ist, dann kann die sichere elektrische Isolation zwischen der Elektrode 24 und der Membrane 22 auch mittels eines auf die Elektrode 24 aufgelegten oder aufgeklebten dünnen Kunststoffringes erreicht werden. Andererseits gewährleistet die Einspannung des Ultraschallwandlers 9 durch die Membrane 22, dass dessen Sitz im Wandlerhalter 11 wohl definiert und langzeitstabil ist. Beim Schwingen betragen die Auslenkungen der Membrane 22 in axialer wie in radialer Richtung nur einige Mikrometer. Somit genügt ein radiales Spiel von wenigen Mikrometern oder etwa einem Hundertstel Millimeter, damit die Membrane 22 in makroskopisch definierter Lage schwingen kann, ohne dass die Schwingungen vom Kunststoffteil 23 radial bedämpft werden.

Bei einer ersten Variante (Fig. 3a) ist auf der Rückseite des Wandlerträgers 11 ein Verdrängungskörper 27 aus Kunststoffaufgesteckt, der eine Verkleinerung des Strömungswiderstandes des Wandlerträgers 11 bewirkt. Der Verdrängungskörper 27 weist deshalb eine stromlinienförmige, gerundete Oberfläche auf.

Bei einer zweiten Variante ist der Verdrängungskörper 27 nicht am Wandlerträger 11, sondern am Einlassstutzen 2 bzw. Auslassstutzen 3 befestigt. Diese Variante bietet den Vorteil, dass der Wandlerträger 11 und der Verdrängungskörper 27 mechanisch entkoppelt sind. Ein plötzlicher Druckstoss im Messwertgeber oder ein Schlag mit einem Werkzeug auf den Verdrängungskörper 27 lässt somit die Lage des Ultraschallwandlers 9 bzw. 10 unverändert. Somit ist gewährleistet, dass der Abstand S (Fig. 1) zwischen den Ultraschallwandlern 9 und 10 und damit auch die Messgenauigkeit des Messwertgebers durch Druckstösse nicht verändert werden.

Der maximale Abstand S (Fig. 1) der Ultraschallwandler 9 und 10 ist durch die Einbaulänge des kleinsten Messwertgebers vorbestimmt. Der Querschnitt des Zwischenteils 4 bzw. eines in das Zwischenteil 4 zusätzlich eingebauten Messrohres ist mit Vorteil so auf den Abstand S abgestimmt, dass die Phasenverschiebung zwischen den flussaufwärts und flussabwärts gesendeten Ultraschallwellen bei Nenndurchfluss etwa 300° beträgt. Bei einem für einen kleinen Nenndurchfluss ausgelegten Messwertgeber ist der Durchmesser des Einlass- und des Auslassstutzens 2 bzw. 3 ebenfalls vorgegeben und beträgt etwa 20 mm. Die Flüssigkeit umfliesst den Ultraschallwandler 9 bzw. 10. Der Strömungswiderstand der Ultraschallwandler 9 bzw. 10 nimmt deshalb mit zunehmendem Durchmesser der Ultraschallwandler 9 bzw. 10 bzw. deren Wandlerträger 11 zu.

Der Durchmesser $2*R_2$ der Scheibe des Ultraschallwandlers 9 beträgt bei einer ersten Version bevorzugt etwa 7.5 mm, höchstens jedoch 9 mm, bei einer zweiten Version etwa 16 mm, die Dicke der Piezokeramik beträgt in beiden Fällen etwa 2 mm. Bei einem Durchmesser der Scheibe von 7.5 mm betragen die Abmessungen des Wandlersträgers 11 quer zur Rohrachse 20 höchstens 8 mm. Die Elektroden 24, 25 sind mit Vorteil aus einem Edelmetall wie Silber oder Gold.

Die Ausbildung der Elektroden 24, 25 mit einem Radius $R_1$, der kleiner als der Radius $R_2$ der Piezoscheibe ist, und die Einspannung des Ultraschallwandlers 9 bzw. 10 im Wandlerträger 11 bewirken eine glockenförmige Abstrahlung des Ultraschalls, dessen maximaler Schallpegel auf die Rohrachse 19 ausgerichtet ist.

Die Ultraschallwandler 9 und 10 senden beispielsweise periodisch während einer Sendephase gleichzeitig ein Paket von N Perioden der Ultraschallwellen mit der Frequenz f und mit einer konstanten Amplitude aus. Nach der Sendephase ist der Ultraschallwandler 9 bzw. 10 erst nach einer Wartezeit von N.'4 Perioden während N/2 Perioden auf Empfang geschaltet, um einen vorbestimmten Ausschnitt aus dem durch das Zwischenteil 4 geleiteten Paket von Ultraschallwellen, das vom anderen Ultraschallwandler 10 bzw. 9 ausgesandt worden ist, in ein elektrisches Signal zu wandeln und einer hier nicht gezeigten Auswerteschaltung zuzuführen, die aus der Phasenverschiebung der von den beiden Ultraschallwandlern 9 und 10 empfangenen Ultraschallwellen die Strömungsgeschwindigkeit und daraus die Durchflussrate bestimmt. Die Frequenz f ist nahe einer Resonanzfrequenz der Ultraschallwandler 9, 10 und beträgt bevorzugt etwa 1 Mhz. In Wasser ergibt sich dann eine Wellenlänge W von etwa 1.5 mm. Die Wellenlänge W ist abhängig von der Flüssigkeit und der Temperatur.

Im folgenden werden einige Ultraschall-Messwertgeber für verschieden grosse Nenndurchflüsse detailliert beschrieben. Allen gemeinsam ist der gleiche Abstand S (Fig. 1) der Ultraschallwandler 9 und 10 von bevorzugt 94 mm.

Beispiel 1

Die Fig. 4 zeigt eine Hälfte eines Messwertgebers für einen kleinen Nenndurchfluss von beispielsweise 0.6 bis 1.5 m³/h. Anstelle des Anschlussgewindes 7 (Fig. 1) ist ein Flansch vorhanden. Im Zwischenteil 4 mit dem Innendurchmesser a = 15 mm ist ein Messrohr 28 eingebaut, das an seinem Ende durch entsprechende Teile des erweiterten Verdrängungskörpers 27 gestützt ist. Das Messrohr 28 ist aus Stahl gefertigt und weist eine lichte Weite mit dem Durchmesser D = 10 mm und eine Länge $L_{Stahl}$ von etwa 80 mm auf. Die Länge $L_{Stahl}$ ist somit grösser als die nach der Lehre der europäischen Patentschrift EP 451 355 berechnete minimale Länge A für einen Wellenleiter

$$A = K*\left(\frac{D}{2}\right)^2 / W \qquad (1),$$

die mit dem Wert von K = 4.67 für Stahl und der Frequenz f = 1 MHz A = 78 mm beträgt. Der vom Ultraschallwandler 10 abgestrahlte Schall breitet sich in einer Schallkeule aus, die das Messrohr 28 auf ihrem Weg zum anderen Ultraschallwandler 9 (Fig. 1) somit wenigstens einmal berührt und dort reflektiert wird.

Die Rohrachse 19 des Zwischenteils 4 und die Rohrachse 20 des Einlassstutzens 2 fallen nicht zusammen: das Zwischenteil 4 ist in Bezug auf die beiden Stutzen 2, 3 asymmetrisch versetzt angeordnet.

Die Stirnkante 29 des Messrohres 28 ist unter einem Winkel α so angeschrägt, dass sich der Innendurchmesser des Messrohres 28 gegen das Ende hin erweitert. Diese Anschrägung vermindert den Druckabfall über dem Messwertgeber, reflektiert aber einen Teil des auftreffenden Schalles in das Messrohr 28 hinein, was zu einer Verzerrung des durch das Messrohr 28 laufenden Ultraschallwellenpakets führt. Zur Minimierung der Schallreflexion in das Messrohr 28 hinein oder zum Ultraschallwandler 10 zurück sind folgende Massnahmen, einzeln oder kombiniert, vorgesehen:

- Der Winkel α wird so gross gewählt, dass der unter dem Winkel β auftreffende und unter dem Reflexionswinkel γ = β reflektierte Schall weder in das Messrohr 28 hinein, noch direkt zum Ultraschallwandler 10 zurück reflektiert wird.
- Die Oberfläche der angeschrägten Fläche ist wellig ausgebildet, damit sie den Schall diffus reflektiert.
- Die Stirnkante 29 des Messrohres 28 ist mit einem Ultraschall absorbierenden Material wie z.B. PVDF verkleidet. Die Verkleidung ist mit Vorteil Bestandteil des Verdrängungskörpers 27 und übernimmt zugleich die Funktion, das Messrohr 28 abzustützen.
- Die Verkleidung ist mit in Strömungsrichtung laufenden Furchen ausgebildet, damit möglichst viel Schall absorbiert werden kann. Da die Furchen in Strömungsrichtung verlaufen, führen sie nicht zu einer merklichen Vergrösserung des Druckabfalles.
- Der Abstand E zwischen dem Ultraschallwandler 9 bzw. 10 und der Stirnkante 29 des Messrohres 28 ist kleiner als W*N/8.

Der Verdrängungskörper 27 kann einzelne oder alle der folgenden Funktionen übernehmen:

- Minimierung des Druckabfalles über dem Messwertgeber durch Ausbildung als den Ultraschallwandlern 9 und 10 vorgesetzte Strömungskappe,
- Schutz der Ultraschallwandler 9 und 10 vor mechanischer Belastung durch den Strömungsdruck oder Druckstösse im Rohrsystem,
- Beeinflussung des Strömungsprofils und des Temperaturgradienten im Messrohr 28 durch aufgesetzte Flügel 30,
- Absorption unerwünschten Schalles durch Verkleidung des Messrohrendes,
- Abstützung des Endes des Messrohres 28 und
- achsiale Halterung des Messrohres 28, so dass eine Verschiebung des Messrohres 28 nicht möglich ist.

Der Verdrängungskörper 27 weist somit vorteilhaft ein rohrförmiges Körperteil 31 auf, das mit einer zangenförmigen Öffnung 32 zur Aufnahme der Stirnkante 29 des Messrohres 28 versehen ist. Die Öffnung 32 ist so ausgebildet, dass das eingesteckte Messrohr 28 mit festem Presssitz eingeklemmt ist. Das auf beiden Seiten von den Körperteilen 31 abgestützte Messrohr 28 berührt das Gehäuse 1 nicht: es ist vom Gehäuse 1 akustisch entkoppelt. Zur Erhöhung der hydraulischen Dichtung kann das Messrohr 28 zusätzlich mit einem O-Ring 35 im Gehäuse 1 gehalten sein. Das Körperteil 31 ist durch beispielsweise vier Flügel 30 mit dem Verdrängungskörper 27 verbunden, wobei die Flügel 30 im Innern des runden Körperteils 31 und am Äusseren des Verdrängungskörpers 27 angeformt sind. Die in Strömungsrichtung verlaufenden Flügel 30 unterteilen das Innere des Gehäuses in mehrere Kammern und bewirken eine Beruhigung der Strömung. Sie können die Wand des Gehäuses 1 berühren oder auch nur als Flügel 30 mit minimaler Höhe ausgeführt sein und nur der Halterung des Körperteils 31 dienen. Die Flügel 30 und/ oder das Körperteil 31 enthalten weiter nicht dargestellte Schnappfedern, die in entsprechende Nuten im Gehäuse 1 einschnappen und so den unverrückbaren Sitz des Verdrängungskörpers 27 im Gehäuse 1 bewirken. Die Flügel 30 können in regelmässigen Winkelabständen angeordnet sein, sie können aber auch in verschieden grossen Winkelabständen angeordnet sein. Verschieden grosse Winkelabstände bieten sich an, wenn die Rohrachsen 19 und 20 nicht zusammenfallen. Da die Flügel 30 selbst ein Strömungshindernis darstellen, lässt sich durch die relative Anordnung der Flügel 30 der Strömungswiderstand lokal erhöhen oder senken, so dass das Strömungsprofil auf der Messstrecke gezielt beeinflusst werden kann. Zu diesem Zweck können die Flügel 30 zusätzlich einzeln oder alle in Längsrichtung, z.B. schraubenförmig, gebogen sein und der strömenden Flüssigkeit bei Bedarf einen Drall aufzwingen. Schlitze, die zwischen der Innenwand des Gehäuses 1 und dem Körperteil 31 gebildet sein können, haben keinen Einfluss auf den Druckabfall oder die Messgenauigkeit, da die dort gestaute Flüssigkeit wie eine feste Begrenzung wirkt. Wegen der glockenförmigen Form der Schallkeule können sich die Flügel 30 bei Bedarf bis in das Messrohr 28 hinein erstrecken, ohne dass sie unerwünschte Schallreflexionen erzeugen.

Ein Schnitt entlang der Linie C-C' ist in der Fig. 5 gezeigt. Die Innenwand des Körperteils 31 ist mit Vorteil mit in Strömungsrichtung verlaufenden Furchen 34 versehen zur Minimierung von am Gehäuse 1 (Fig. 4) reflektierten Ultraschallwellen. Der vom Ultraschallwandler 10 (Fig. 4) neben das Messrohr 28 abgestrahlte Ultraschall wird vom Körperteil 31 beim Auftreffen teilweise reflektiert. Bei der Reflexion am Körperteil 31 gelangt eventuell ein geringer Anteil des Ultraschalls zum Ultraschallwandler 10 zurück, der grössere Anteil läuft sich nach mehreren Reflexionen in den Furchen 34 des Körperteils 31 tot.

Mit Vorteil ist der Abstand E (Fig. 4) zwischen dem Ultraschallwandler 10 und der Stirnkante 29 des Messrohres 28 so klein gewählt, dass die N-te, d. h. die letzte während der vorangegangenen Sendephase ausgestrahlte Schwingungsperiode des Ultraschalls nach einer Reflexion am Körperteil 31 noch während der Wartezeit beim gleichen Ultraschallwandler 10 wieder eintrifft, damit die Messung während der Empfangszeit nicht gestört wird.

Die Distanz E, die die reflektierte N-te Schwingung während der Wartezeit zurücklegen kann, bevor der Ultraschallwandler 10 auf Empfang geschaltet ist, ist von der Wellenlänge W der Ultraschallwellen abhängig. Im obigen Beispiel ist die Distanz E kleiner als N/8 Wellenlängen W, also E=W*N/8. In einem Beispiel beträgt die Länge des während der Sendephase ausgesandten Paketes 64 Perioden der Ultraschallwellen und die Wellenlänge W des verwendeten Ultraschalls etwa 1.5 mm. Die Distanz E ist daher kleiner als 12 mm.

Der Verdrängungskörper 27 besteht mit Vorteil aus einem bis zu einer Temperatur von 150°C wasserbeständigem Kunststoff, insbesondere einem Duroplast oder Thermoplast. Ein solcher Thermoplast ist z.B. PVDF.

## Beispiel 2

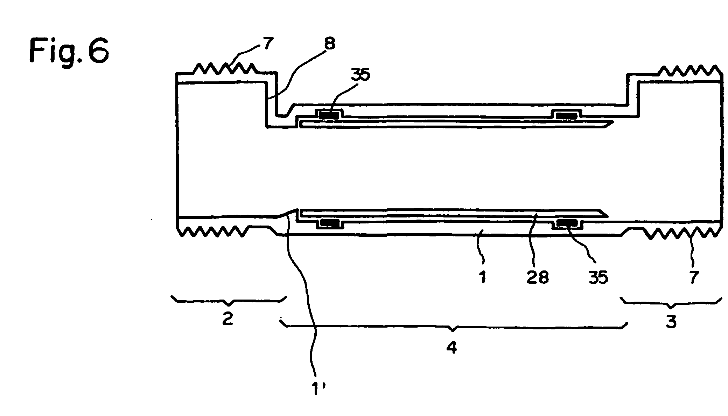

Bei dem in der Fig. 6 gezeigten Beispiel ist die angeschrägte Stirnkante des gegen den Einlassstutzen 2 gerichteten Endes des Messrohres 28 durch eine keilförmige Anschrägung 1' im Gehäuse 1 ersetzt. Das Messrohr 28 ist von der Seite des Auslassstutzens 3 in das Gehäuse 1 eingeführt und bildet einen nahtlosen Übergang mit der Anschrägung 1' im Gehäuse 1. Das gegen den Auslassstutzen 3 gerichtete Ende des Messrohres 28 weist die oben beschriebene Anschrägung auf. Das Messrohr 28 ist beidseitig mit den O-Ringen 35 in dem mit Nuten versehenen Gehäuse 1 schallabgekoppelt abgestützt.

## Beispiel 3

Der Messwertgeber ist für einen etwas grösseren Nenndurchfluss von beispielsweise 2.5 m$^3$/h ausgelegt und weist das gleiche Gehäuse 1 auf wie der Messwertgeber des Beispiels 1, jedoch ist das Messrohr 28 weggelassen. Das Gehäuse 1 ist aus Messing gefertigt, dessen K-Wert gemäss der europäischen Patentschrift EP 451 355 K = 2.33 beträgt. Das Zwischenteil 4 dient somit als Messrohr, dessen Durchmesser dem Innendurchmesser a = 15 mm und dessen Länge $L_{Messing}$ dem Abstand S (Fig. 1) der beiden Ultraschallwandler 9 und 10 entsprechen. Die Länge $L_{Messing}$ ist mit 94 mm grösser als die nach der Gleichung (1) berechnete Länge A = 87 mm, so dass auch dieses Zwischenteil 4 als Wellenleiter für Ultraschall arbeitet.

## Beispiel 4

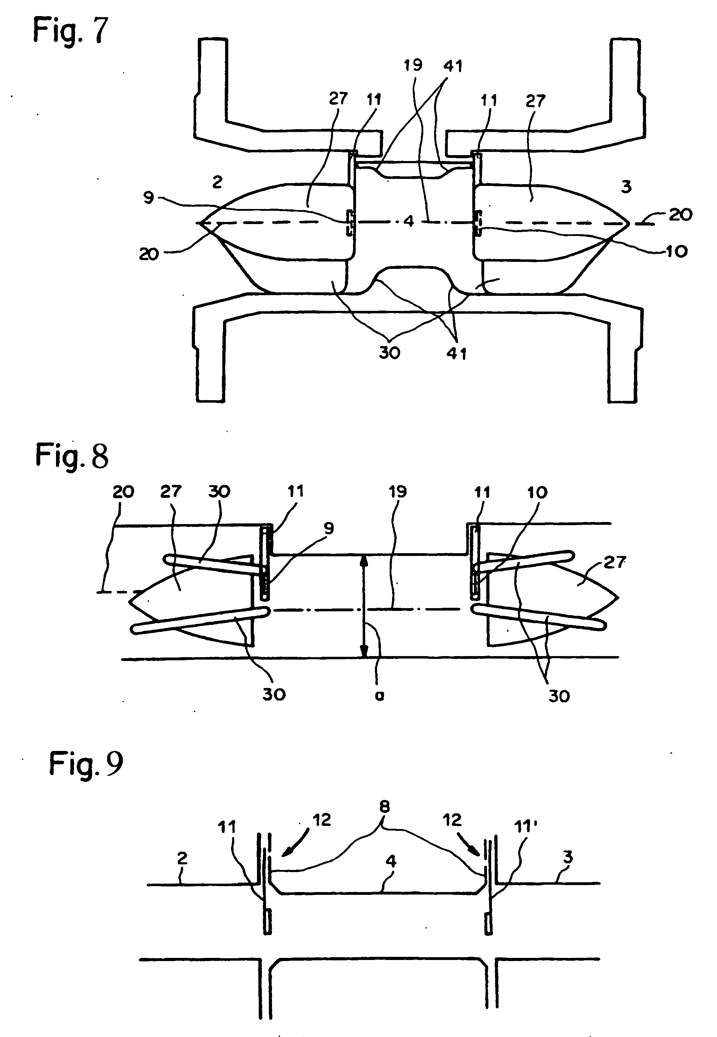

Die Fig. 7 zeigt einen Messwertgeber für einen grossen Nenndurchfluss von beispielsweise 60 m$^3$/h. Der Einlassstutzen 2 und der Auslassstutzen 3 sind länger als die zwischen den Ultraschallwandlern 9 und 10 gebildete Messstrecke. Der Verdrängungskörper 27 ist ebenfalls ein längliches Gebilde, das beinahe so lang wie der Einlassstutzen 2 bzw. der Auslassstutzen 3 ist. Die Flügel 30 erstrecken sich über die ganze Länge des Körpers 27 und sind bis zum Zwischenteil 4 geführt. In der Schnittzeichung ist nur ein einziger von drei in regelmässigen Winkelabständen von 120° angeordneten Flügeln 30 sichtbar. Die Flügel 30 tragen den Verdrängungskörper 27; sie greifen schnappend in die Wand des Gehäuses 1 ein. Der Verdrängungskörper 27 umschliesst den Wandlerträger 11 seitlich. Die Rohrachse 19 und die Rohrachse 20 fallen zusammen. Der Wandlerträger 11 enthält den Ultraschallwandler 9 bzw. 10 mit einer Piezoscheibe, deren Durchmesser etwa 16 mm beträgt, so dass das von der Messung erfasste Volumen etwas grösser als das erfasste Volumen der vorangehenden Beispiele ist. Der Innendurchmesser des Zwischenteils 4 beträgt wenigstens 28 mm und der Messwertgeber arbeitet als Nicht-Wellenleiter. Der Übergang von den Stutzen 2, 3 zum Zwischenteil 4 ist als geschwungene Fläche 41 ausgeführt.

## Beispiel 5

Die Fig. 8 zeigt einen als Nicht-Wellenleiter ausgelegten Messwertgeber, bei dem die Ultraschallwandler 9, 10 nicht auf der Rohrachse 20 zentriert sind: Der Mittelpunkt der kreisförmigen Piezoscheibe (Fig. 3b) der Ultraschallwandler 9, 10 liegt nicht auf der Rohrachse 19. Die zwischen den Ultraschallwandlern 9, 10 gebildete Messstrecke ist also bezüglich der Rohrachse 19 asymmetrisch versetzt. Bevorzugt sind Ultraschallwandler 9, 10 mit kleiner Piezoscheibe verwendet, damit bei einem grösseren Innendurchmesser a des Zwischenteils 4 die Schallkeule die Gehäuseinnenwand im Zwischenteil 4 möglichst nicht beschallt. Bei einem kleineren Innendurchmesser a kann es sein, dass die näher bei der die Mittelpunkte der Ultraschallwandler 9, 10 verbindenden Achse liegenden Teile der Gehäuseinnenwand beschallt, die weiter entfernt liegenden Teile nicht beschallt sind. Kleine Ultraschallwandler 9, 10 bieten zugleich den Vorteil eines kleinen Druckverlustes. Der Verdrängungskörper 27 und die Flügel 30 sind so ausgebildet, dass die Flüssigkeit sowohl bei einem Durchfluss im unteren wie im oberen Messbereich des Messwertgebers durch das von der Schallkeule beschallte Volumen strömt. Der Verdrängungskörper 27 ist deshalb bevorzugt symmetrisch bezüglich der Rohrachse 19 und nicht bezüglich der Rohrachse 20 angeordnet. Weiter können, wie schon beim Beispiel 1 beschrieben, die Flügel 30 in verschieden grossen Winkelabständen angeordnet sein, um den Strömungswiderstand lokal zu erhöhen oder zu senken, so dass das Strömungsprofil auf der Messstrecke gezielt beeinflusst werden kann.

Die Stabilität der Lage der Ultraschallwandler 9 und 10 wird dadurch besonders gross, dass die Verdrängungskörper 27 am Gehäuse 1 befestigt und nicht auf die Wandlerträger 11 bzw. 11' aufgesetzt sind.

Die Ausbildung des Gehäuses 1 mit radialen Flächen 8 erlaubt sowohl eine mechanisch stabile Befestigung der Wandlerträger 11 als auch eine einfache Abdichtung der Anschlussdrähte 17, 18 der Ultraschallwandler 9 bzw. 10 gegenüber der Flüssigkeit. Der Einlassstutzen 2, das Zwischenteil 4 und der Auslassstutzen 3 können auch drei getrennte Teile sein. In diesem Fall weist das Zwischenteil 4, wie in der Fig. 9 dargestellt, an seinen Enden mit radialen Flächen 8 und mit Bohrungen 12 ausgebildete Flansche 44 auf, an denen sowohl die Wandlerträger 11 bzw. 11' als auch der Einlassstutzen 2 bzw. der Auslassstutzen 3 befestigt sind. Bei diesem Beispiel ist das Zwischenteil 4 zudem gegen die Enden aufgeweitet. Der Einlassstutzen 2, das Zwischenteil 4 und der Auslassstutzen 3 können dabei verschraubt, vernietet, verschweisst oder anderswie verbunden sein.

Die einzelnen Beispiele dienen der Illustration der Erfindung. Technische Merkmale des einen Beispiels lassen sich auch mit Merkmalen eines anderen Beispiels kombinieren.

## Patentansprüche

1. Messwertgeber zur Bestimmung der Durchflussmenge einer durch ein Rohrsystem strömenden Flüssigkeit durch Messung der mittleren Durchflussgeschwindigkeit mit Hilfe von Ultraschallsignalen, mit einem im wesentlichen rohrförmigen Gehäuse (1), das einen Einlassstutzen (2) und einen Auslassstutzen (3) aufweist, die durch ein Zwischenteil (4) verbunden sind, wobei die Flüssigkeit den Einlassstutzen (2), das Zwischenteil (4) und den Auslassstutzen (3) in einer im wesentlichen gleichen, axialen Richtung (5) durchströmt und wobei in axialer Richtung (5) abstrahlende, von je einem Wandlerträger (11) gehaltene und mit der Flüssigkeit in mittelbarer Berührung stehende Ultraschallwandler (9; 10) vorhanden sind, so dass im Zwischenteil (4) zwischen den Ultraschallwandlern (9; 10) eine Ultraschallmessstrecke gebildet ist, **dadurch gekennzeichnet, dass** der Einlass- und der Auslassstutzen (2, 3) im Bereich eines Übergangs zum Zwischenteil (4) jeweils mit einer radial, d.h. senkrecht zur axialen Richtung 5 gerichteten, ebenen Fläche (8) ausgebildet sind, an der ein einen Ultraschallwandler (9 bzw. 10) tragender Wandlerträger (11, 11') befestigt ist, und dass diese Flächen (8) eine Bohrung (12) aufweisen, durch die Anschlussdrähte (17; 18) der Ultraschallwandler (9; 10) vom Inneren des Gehäuses (1) nach draussen geführt sind.

2. Messwertgeber nach Anspruch 1, **dadurch gekennzeichnet, dass** die Rohrachse (19) des Einlass- bzw. des Auslassstutzens (2; 3) gegenüber der Rohrachse (20) des Zwischenteils (4) in radialer Richtung versetzt ist.

3. Messwertgeber nach Anspruch 1 oder 2, **dadurch gekennzeichnet, dass** die Ultraschallwandler (9; 10) kreisförmige Scheiben aus Piezokeramik aufweisen, welche den Ultraschall abstrahlen, und dass die Mittelpunkte dieser Scheiben ausserhalb der Rohrachse (20) des Zwischenteils (4) liegen.

4. Messwertgeber nach Anspruch 1, **dadurch gekennzeichnet, dass** die Ultraschallwandler (9; 10) aus einer Scheibe aus Piezokeramik bestehen, dass der in den Wandlerträger (11) eingelegte Ultraschallwandler (9; 10) aus dem Wandlerträger (11) in Richtung der Schallabgabe leicht übersteht und mittels einer mit dem Wandlerträger (11) verschweissten Membrane (22) unter Zugspannung im Wandlerträger (11) eingespannt ist.

## Revendications

1. Indicateur de valeurs de mesure pour la détermination de la quantité de débit d'un liquide s'écoulant dans un système de tuyaux par mesure de la vitesse de débit moyenne à l'aide de signaux à ultrasons, comportant un boîtier sensiblement de forme tubulaire (1) qui présente un raccord d'entrée (2) et un raccord de sortie (3) qui sont reliés par une pièce intermédiaire (4), le liquide passant à travers le raccord d'entrée (2), la pièce intermédiaire (4) et le raccord de sortie (3) dans un sens axial (5) sensiblement identique et étant prévus des transducteurs ultrasonores (9 ; 10) irradiant dans le sens axial (5), maintenus chacun par un support de transducteur (1) et en contact direct avec le liquide, de manière à constituer dans la pièce intermédiaire (4), entre les transducteurs ultrasonores (9; 10), un segment de mesure à ultrasons, **caractérisé en ce que** le raccord d'entrée et de sortie (2, 3) est réalisé au niveau d'une transition vers la pièce intermédiaire (4) avec respectivement une surface plane (8) dirigée radialement, c'est-à-dire perpendiculairement au sens axial (5), à laquelle est fixé un transducteur ultrasonore (9) ou un support de transducteur le supportant (11, 11') et que ces surfaces (8) présentent un alésage (12) à travers lequel les câbles de raccordement (17 ; 18) des transducteurs ultrasonores (9 ; 10) sont guidés de l'intérieur du boîtier (1) vers l'extérieur.

2. Indicateur de valeurs de mesure selon la revendication 1, **caractérisé en ce que** l'axe de tube (19) du raccord d'entrée ou de sortie (2 ; 3) est décalé dans le sens radial par rapport à l'axe de tube (20) de la pièce intermédiaire (4).

**3.** Indicateur de valeurs de mesure selon la revendication 1 ou 2, **caractérisé en ce que** les transducteurs ultrasonores (9 ; 10) présentent des disques de forme circulaire en piézocéramique d'où irradie l'ultrason et que les points centraux de ces disques se trouvent en dehors de l'axe de tube (20) de la pièce intermédiaire (4).

**4.** Indicateur de valeurs de mesure selon la revendication 1, **caractérisé en ce que** les transducteurs ultrasonores (9 ; 10) consistent en un disque de piézocéramique, que le transducteur ultrasonore (9 ; 10) inséré dans le support de transducteur (11) dépasse légèrement du support de transducteur (11) en direction de l'émission sonore et est maintenu sous tension dans le support de transducteur (11) au moyen d'une membrane (22) soudée au support de transducteur (11).

**Claims**

**1.** A sensor for determining the flow rate of a fluid flowing through a tube system, by way of measurement of the average flow velocity with the help of ultrasonic signals, with an essentially tubular housing (1) which comprises an inlet port (2) and an outlet port (3) which are connected by an intermediate part (4), wherein the fluid flows through the inlet port (2), the intermediate part (4) and the outlet port (3) in an essentially equal, axial direction (5) and wherein ultrasonic transducers (9; 10) are present which emit in the axial direction (5), are held in each case by a transducer carrier (11) and are in indirect contact with the fluid, so that an ultrasonic measurement path is formed in the intermediate part (4) between the ultrasonic transducers (9, 10), **characterised in that** the inlet and the outlet port (2, 3) in the region of a transition to the intermediate part (4) in each case are formed with a plane surface (8) directed radially, i.e. perpendicularly to the axial direction (5), on which a transducer carrier (11, 11') carrying an ultrasonic transducer (9 or 10) is fastened, and that these surfaces (8) comprise a bore (12) through which connection wires (17; 18) of the ultrasonic transducers (9, 10) are lead to the outside from the inside of the housing (1).

**2.** A sensor according to claim 1, **characterised in that** the tube axis (19) of the inlet or outlet port (2; 3) is offset in the radial direction with respect to the tube axis (20) of the intermediate part (4).

**3.** A sensor according to claim 1 or 2, **characterised in that** the ultrasonic transducers (9; 10) comprise circular discs of piezoceramic which emit the ultrasound, and that the middle points of these disks lie outside the tube axis (20) of the intermediate part (4).

**4.** A sensor according to claim 1, **characterised in that** the ultrasonic transducers (9; 10) consist of a disk of piezoceramic, that the ultrasonic transducers (9; 19) applied in the transducer carrier (11) project slightly out of the transducer carrier (11) in the direction of the sound emission and is tightened in the transducer carrier (11) under tension by way of a membrane (22) which is welded to the transducer carrier (11).

Fig.1

Fig.2c →

Fig.2a

Fig.2b →

**Fig. 3a**

**Fig. 3b**

**Fig. 4**

**Fig. 5**

Fig.6

Fig. 7

Fig. 8

Fig. 9